# EUROPEAN PATENT APPLICATION

(11) **EP 4 549 523 A1**
(43) Date of publication of application: **07.05.2025**
(21) Application number: 23831497.5
(22) Date of filing: 28.06.2023
(51) Int. Cl.: C09D 11/17, B43K 7/00, B43K 8/02

(54) **INK COMPOSITION FOR WRITING UTENSILS AND WRITING UTENSIL ACCOMMODATING SAME**

(30) Priority: 29.06.2022 JP 2022105064
(71) Applicant: Kabushiki Kaisha Pilot Corporation (also trading as Pilot Corporation), Tokyo 104-8304 (JP)
(72) Inventor: OZEKI, Yushi, Tokyo 104-8304 (JP)
(74) Representative: Prinz & Partner mbB
(86) International application number: PCT/JP2023/023935
(87) International publication number: WO 2024/005057

(57) **Abstract**

A writing instrument ink composition comprising at least a pigment containing a guanine pigment, and a solvent, and the guanine pigment has an average particle size of 0.2 to 0.95 µm.

## Description

### TECHNICAL FIELD

The present disclosure relates to a writing instrument ink composition and a writing instrument containing the same. More specifically, the present disclosure relates to a writing instrument ink composition that is excellent in pigment dispersion stability and is capable of forming clear handwriting having high concealability, and a writing instrument containing the same.

### BACKGROUND ART

There is conventionally known a writing instrument ink composition in which a white pigment such as titanium oxide is used to obtain handwriting having concealability. Further, a writing instrument ink composition capable of forming pastel-like handwriting by mixing a colorant of other color with such an ink composition having high concealability is also preferably used.

However, since titanium oxide is a pigment having a large specific gravity, there is a problem that the pigment is likely to settle with the lapse of time, and it is difficult to redisperse the pigment when a hard cake is formed. Further, a writing instrument in which an ink composition containing titanium oxide is used is likely to decrease its handwriting density when the writing instrument is stored with its writing tip part facing upward and is likely to degrade its ink discharging properties when the writing instrument is stored with its writing tip part facing downward. For this reason, studies have been made to suppress settling of titanium oxide by increasing the viscosity of the ink using a thickener or the like. However, there are limitations on the writing instrument to which such a high-viscosity ink composition can be applied. In an ink composition in which titanium oxide and a colorant of other color are used in combination, color separation may occur in the ink because of a difference in specific gravity between the titanium oxide and the colorant. Thus, studies have been made to suppress the settling of titanium oxide and to suppress the formation of a hard cake (see, for example, Patent Documents 1 to 4).

Patent Document 1 discloses an aqueous pigment composition made of titanium oxide, an aluminum silicate-based pigment, and a specific resin.

Patent Document 2 discloses an aqueous ink composition made of at least titanium oxide, succinoglycan, and water.

Patent Document 3 discloses an aqueous ink for a ballpoint pen made of titanium oxide and oleic acid.

Patent Document 4 discloses an aqueous pigment ink for a writing instrument made of titanium oxide, a chromatic pigment, a silica powder and/or an aluminosilicate, a water-soluble resin, a specific dispersant, a surfactant, and water.

The above compositions (ink compositions) can slow the settling rate of titanium oxide by using a specific compound, but titanium oxide is likely to settle with the lapse of time to form a hard cake or cause color separation in the ink, and it has been difficult to stably disperse titanium oxide in the ink compositions.

### CONVENTIONAL ART DOCUMENT

### PATENT DOCUMENT

Patent Document 1: JP-S59-217776 A
Patent Document 2: JP-H8-113752 A
Patent Document 3: JP-H10-251588 A
Patent Document 4: JP-H11-217532 A

### DISCLOSURE OF THE INVENTIONPROBLEMS TO BE SOLVED BY THE INVENTION

An object of the present disclosure is to provide a writing instrument ink composition that is excellent in pigment dispersion stability and is capable of forming clear handwriting having high concealability, and a writing instrument containing the same.

### MEANS FOR SOLVING THE PROBLEMS

Aspect 1 of the present invention provides a writing instrument ink composition comprising at least a pigment containing a guanine pigment, and a solvent, wherein the guanine pigment has an average particle size of 0.2 to 0.95 µm.

Aspect 2 of the present invention provides the ink composition according to Aspect 1, further comprising a dispersant.

Aspect 3 of the present invention provides the ink composition according to Aspect 2, wherein the dispersant includes an acidic group and/or a salt of an acidic group.

Aspect 4 of the present invention provides the ink composition according to any one of Aspects 1 to 3, wherein the content of the guanine pigment relative to the total mass of the ink composition is 1 to 50% by mass.

Aspect 5 of the present invention provides the ink composition according to any one of Aspects 1 to 4, further comprising a colorant.

Aspect 6 of the present invention provides a writing instrument containing the ink composition according to any one of Aspects 1 to 5.

### EFFECTS OF THE INVENTION

According to the embodiments of the present invention, it is possible to provide a writing instrument ink composition including a pigment containing a guanine pigment, the pigment being less likely to settle with the lapse of time, which is excellent in pigment dispersion stability and is capable of forming clear handwriting having high concealability, and a writing instrument containing the same.

### MODE FOR CARRYING OUT THE INVENTION

A writing instrument ink composition according to the embodiments of the present invention (hereinafter referred to as "ink composition" or "ink") includes at least a pigment containing a guanine pigment, and a solvent. Hereinafter, each component constituting the ink composition according to the embodiments of the present invention will be described.

The ink composition according to the embodiments of the present invention contains a guanine pigment. The guanine pigment is a pigment composed of guanine.

Guanine is one of main bases constituting nucleic acids and is an organic matter of biological origin, and exists in a crystalline state on the body surface of fishes such as hairtail, herring, and sardine. Guanine in the crystalline state (guanine crystals) forms a laminate structure on the body surface of these fishes, which reflect or refract light, thus giving fishes such as hairtail, herring, and sardine a glossy (pearl-like glossy) appearance on their body surfaces.

Fish scale foil obtained from guanine crystals as starting materials is used as a pearlescent pigment in cosmetics and food additives, so that guanine is a highly safe compound with little impact on the human body and the environment.

Guanine is available from commercial products, and may also be a natural guanine crystal collected from fishes such as hairtail, herring, and sardine. It is also possible to use an artificial guanine crystal obtained by dissolving a commercially available product or a natural guanine crystal in a solvent, followed by recrystallization.

The guanine pigment applied to the embodiments of the present invention exhibits a white color because of having a high refractive index (n = 1.8 to 2.0), thus exhibiting an effect of imparting a concealability to the handwriting. Titanium oxide, which is conventionally used as a white pigment, is likely to settle in the ink composition because of having large specific gravity, and when titanium oxide settles, it is likely to form a hard cake, which makes redispersion of titanium oxide difficult. In contrast, the guanine pigment is less likely to settle with the lapse of time because of having a small specific gravity as compared with titanium oxide, thus suppressing the formation of a hard cake. Further, the guanine pigment has an average particle size of 0.2 to 0.95 µm, thus exhibiting the effect of excellent dispersion stability.

By using a pigment containing a guanine pigment having a specific average particle size, the ink composition according to the embodiments of the present invention is less likely to settle with the lapse of time, leading to excellent dispersion stability. Therefore, the ink composition according to the embodiments of the present invention can form clear handwriting having high concealability at a uniform density. Even when the ink composition according to the present invention contains a colorant mentioned later, separation of the guanine pigment and the colorant in the ink composition is suppressed. Therefore, the ink composition according to the embodiments of the present invention can form colored handwriting having high concealability at a uniform density.

The average particle size of the guanine pigment applied to the embodiments of the present invention is within a range of 0.2 to 0.95 µm, preferably 0.25 to 0.65 µm, and more preferably 0.25 to 0.4 µm. When the average particle size is within the above range, both the concealability of the ink composition and the dispersion stability of the guanine pigment are achieved at high levels.

The average particle size is a value of a volume-based average particle size (median diameter) measured using a dynamic light scattering particle size distribution analyzer [manufactured by MicrotracBEL Corporation, product name: NANOTRAC FLEX] calibrated based on the numerical value measured using a standard sample or other measurement methods.

Even when the ink composition according to the embodiments of the present invention contains pigments other than the guanine pigment, it is possible to measure the average particle size of guanine alone in the same manner as mentioned above by separating guanine from the other pigments by a density gradient centrifugation method which utilizes the difference in specific gravity.

The content of the guanine pigment relative to the total mass of the ink composition is not particularly limited but is preferably 1 to 50% by mass, and more preferably 5 to 30% by mass. When the content of the guanine pigment exceeds 50% by mass, the ink discharge stability of the writing instrument containing the ink composition is likely to degrade, and writing defects such as faint parts and line skipping are likely to occur. When the content is less than 1% by mass, it becomes difficult to obtain a suitable handwriting density as a writing instrument, and the concealability of the handwriting is likely to degrade.

The guanine pigment is not particularly limited as long as it can be dispersed in the ink composition. The guanine pigment may be produced, for example, by mechanically pulverizing commercially available products, or natural or artificial guanine crystals into particles using various dispersing machines such as a jet mill, an attritor, and a bead mill. It is also possible to produce by dissolving commercially available products or natural guanine crystals in a solvent, followed by recrystallization into granules. It is also possible to use, as the guanine pigment, those obtained by coloring the guanine pigment itself.

The ink composition according to the embodiments of the present invention may be further mixed with a dispersant. For example, when the solvent to be applied to the present invention is water, the dispersant adsorbs to the surface of the guanine pigment so that the dispersant can keep a distance between the guanine pigments at a certain value or more to prevent aggregation while separating the guanine pigments from each other, and thus the dispersibility of the guanine pigment in the ink can be improved. Even when the guanine pigments are aggregated to form aggregates, aggregates having a low density are formed, and thus formation of a hard cake after settling of the guanine pigment is likely to be suppressed.

Examples of the dispersant include a surfactant, a polymer dispersant, an inorganic compound and the like.

Examples of the surfactant used as the dispersant include a nonionic surfactant, an anionic surfactant, a cationic surfactant, an amphoteric surfactant and the like.

Examples of the polymer dispersant used as the dispersant include polyvinyl butyral; polyvinyl ether; ketone resins; resins having a carboxy group, such as a styrene-maleic acid copolymer, a styrene-acrylic acid copolymer and an acrylic acid-sulfonic acid copolymer; hydroxyethyl cellulose and derivatives thereof; acrylic polymers; PO/EO adducts; and amine-based oligomers of polyester.

Examples of the inorganic compound used as the dispersant include pyrophosphate, hexametaphosphate and the like.

According to one embodiment of the present invention, the dispersant preferably has an acidic group and/or a salt of an acidic group. The acidic group and/or the salt of the acidic group is/are likely bonded to guanine (for example, an -NH₂ group in guanine) and the dispersant is likely to gather around guanine, leading to excellent effect as the dispersant. Examples of the acidic group include a phosphoric acid group, a carboxy group, a sulfonic acid group, a phosphate ester group, a sulfate ester group, a nitrate ester group, a phosphorous acid group, a phosphonic acid group, a sulfinic acid group and the like. Examples of the salt of the acidic group include metal salts such as potassium and sodium salts of the above acidic groups, or a 2-amino-2-methyl-1-propanol salt. These may be contained alone or in combination of two or more thereof in one molecule.

Commercially available dispersants having an acidic group and/or a salt of an acidic group are available from DISPERBYK series manufactured by BYK Japan K.K., FLOWLEN series manufactured by Kyoeisha Chemical Co., Ltd., Aron series manufactured by Toagosei Co., Ltd., JONCRYL series manufactured by BASF Japan Ltd., Solsperse series manufactured by Lubrizol Japan Ltd. and the like. A dispersant having an acidic group and/or a salt of an acidic group can also function as a surfactant and/or a lubricant, like a phosphate ester-based surfactant, but it is treated as a dispersant in the embodiments of the present invention.

According to one embodiment of the present invention, the molecular weight (mass average molecular weight) may be 300 or more and 200,000 or less, or 300 or more and 50,000 or less.

According to one embodiment of the present invention, the dispersant preferably has an acid value. This allows the dispersant to bond more easily to guanine.

According to one embodiment of the present invention, it is preferable to satisfy at least one of the following conditions (a) to (e). This allows the dispersant to bond more easily to guanine.
(a): The dispersant has an acid value of 100 mgKOH/g or more.
(b): The dispersant has an acid value of 5 to 15 mgKOH/g and has a comb structure (i.e., a structure in which a branch polymer moiety is graft-bonded to a trunk polymer moiety).
(c): The dispersant contains a carboxy group-containing styrene-acrylic copolymer.
(d): The dispersant contains an acrylic-sulfonic acid copolymer.
(e): The dispersant has an acid value and an amine value of 15 or more and less than 30.

Examples of commercially available dispersants which have an acidic group and/or a salt of an acidic group and satisfy the above (a) include DISPERBYK-102 (manufactured by BYK Japan K.K.), JONCRYL 57J (manufactured by BASF Japan Ltd.), JONCRYL 63J (manufactured by BASF Japan Ltd.), JONCRYL 70J (manufactured by BASF Japan Ltd.) and the like.

Examples of commercially available dispersants which have an acidic group and/or a salt of an acidic group and satisfy the above condition (b) include Solsperse 46000 (manufactured by Lubrizol Japan Ltd.), Solsperse 47000 (manufactured by Lubrizol Japan Ltd.) and the like.

Examples of commercially available dispersants which have an acidic group and/or a salt of an acidic group and satisfy the above condition (c) include Joncryl 57J (manufactured by BASF Japan Ltd.), Joncryl 63J (manufactured by BASF Japan Ltd.), Joncryl 70J (manufactured by BASF Japan Ltd.) and the like.

Examples of commercially available dispersants which have an acidic group and/or a salt of an acidic group and satisfy the above (d) include Aron A-12SL (manufactured by Toagosei Co., Ltd.), Aron A-6016A (manufactured by Toagosei Co., Ltd.), Aron A-6017 (manufactured by Toagosei Co., Ltd.), Aron A-6020 (manufactured by Toagosei Co., Ltd.), Aron A-6031 (manufactured by Toagosei Co., Ltd.) and the like. The acrylic-sulfonic acid-based copolymer may be in the form of a metal salt (preferably a sodium salt) or an unneutralized type, and preferably in the form of an unneutralized type.

Examples of commercially available dispersants which have an acidic group and/or a salt of an acidic group and satisfy the above (e) include DISPERBYK-2010 (manufactured by BYK Japan K.K.), FLOWLEN G-700AMP (manufactured by Kyoeisha Chemical Co., Ltd.) and the like.

When the ink composition according to the embodiments of the present invention contains a dispersant, the content of the dispersant relative to the guanine pigment is not particularly limited, but is preferably within a range of 0.1% to 100% by mass, more preferably 1 to 50% by mass, and still more preferably 5 to 30% by mass. When the content of the dispersant is within the above range, the dispersibility of the guanine pigment in the ink composition can be more stably maintained.

The ink composition according to the embodiments of the present invention contains a solvent. Examples of the solvent include water and an organic solvent.

The water is not particularly limited, and examples thereof include tap water, ion-exchanged water, ultrafiltered water, distilled water and the like.

The organic solvent is not particularly limited, and examples thereof include glycol ether-based solvents, glycol-based solvents, alcohol-based solvents, ketone-based solvents, ester-based solvents, hydrocarbon-based solvents and the like.

Examples of the glycol ether-based solvent include ethylene glycol monomethyl ether, ethylene glycol monoethyl ether, ethylene glycol monobutyl ether, ethylene glycol dimethyl ether, ethylene glycol monophenyl ether, propylene glycol monomethyl ether, propylene glycol monoethyl ether, diethylene glycol dimethyl ether, 3-methoxybutanol, 3-methoxy-3-methylbutanol and the like.

Examples of the glycol-based solvent include diethylene glycol, triethylene glycol, polyethylene glycol, propylene glycol, dipropylene glycol, butylene glycol, ethylene glycol and the like.

Examples of the alcohol-based solvent include benzyl alcohol, methanol, ethanol, 1-propanol, 2-propanol, 1-butanol, isobutanol, 2-butanol, tert-butanol, propargyl alcohol, allyl alcohol, 3-methyl-1-butyn-3-ol, ethylene glycol monomethyl ether acetate, other higher alcohols and the like.

Examples of the ketone-based solvent include acetone, dimethyl ketone, diethyl ketone, methyl ethyl ketone, methyl isobutyl ketone and the like.

Examples of the ester-based solvent include n-butyl formate, isobutyl formate, ethyl acetate, n-propyl acetate, isopropyl acetate, n-butyl acetate, isobutyl acetate, ethyl propionate, n-butyl propionate, methyl butyrate, ethyl butyrate, methyl lactate, ethyl lactate and the like.

Examples of the hydrocarbon-based solvent include n-hexane, n-heptane, n-octane, isooctane, cyclohexane, methylcyclohexane, ethylcyclohexane, toluene, xylene, ethylbenzene and the like.

The solvent may be used alone or in combination of two or more thereof.

The content of the solvent relative to the total mass of the ink composition is not particularly limited, but is preferably 10 to 90% by mass, and more preferably 30 to 80% by mass.

The ink composition according to the embodiments of the present invention may be further mixed with a colorant.

By using a guanine pigment and a colorant in combination, it is possible to obtain an ink composition exhibiting a color (pastel-like color) having concealability.

The colorant is not particularly limited as long as it is a dye or pigment that can be dissolved or dispersed in a solvent.

Examples of the dye include an acidic dye, a basic dye, a direct dye, an oil-soluble dye, and a disperse dye.

Examples of the acid dye include New Coccine (C.I. 16255), Tartrazine (C.I. 19140), Acid Blue Black 10B (C.I. 20470), Guinea Green (C.I. 42085), Brilliant Blue FCF (C.I. 42090), Acid Violet 6B (C.I. 42640), Soluble Blue (C.I. 42755), Naphthalene Green (C.I. 44025), Eosin (C.I. 45380), Phloxin (C.I. 45410), Erythrosine (C.I. 45430), Nigrosine (C.I. 50420), Acid Flavin (C.I. 56205) and the like.

Examples of the basic dye include Chrysoidine (C.I. 11270), Methyl Violet FN (C.I. 42535), Crystal Violet (C.I. 42555), Malachite Green (C.I. 42000), Victoria Blue FB (C.I. 44045), Rhodamine B (C.I. 45170), Acridine Orange NS (C.I. 46005), Methylene Blue B (C.I. 52015) and the like.

Examples of the direct dye include Congo Red (C.I. 22120), Direct Sky Blue 5B (C.I. 24400), Violet BB (C.I. 27905), Direct Deep Black EX (C.I. 30235), Kayarus Black G conc. (C.I. 35225), Direct First Black G (C.I. 35255), Phthalocyanine Blue (C.I. 74180) and the like.

Examples of the oil-soluble dye include C.I. Solvent Black 7, C.I. Solvent Black 123, C.I. Solvent Blue 2, C.I. Solvent Blue 25, C.I. Solvent Blue 55, C.I. Solvent Blue 70, C.I. Solvent Red 8, C.I. Solvent Red 49, C.I. Solvent Red 100, C.I. Solvent Violet 8, C.I. Solvent Violet 21, C.I. Solvent Green 3, C.I. Solvent Yellow 21, C.I. Solvent Yellow 44, C.I. Solvent Yellow 61, C.I. Solvent Orange 37 and the like.

Examples of the disperse dye include C.I. Disperse Yellow 82, C.I. Disperse Yellow 3, C.I. Disperse Yellow 54, C.I. Disperse Red 191, C.I. Disperse Red 60, C.I. Disperse Violet 57 and the like.

Examples of the pigment include inorganic pigments, organic pigments, glitter pigments, fluorescent pigments, light-storing pigments and the like.

Examples of the inorganic pigment include carbon black, iron black, yellow iron oxide, red oxide, ultramarine blue and the like.

Examples of the organic pigment include azo-based pigments, phthalocyanine-based pigments, quinacridone-based pigments, perylene-based pigments, perinone-based pigments, isoindolinone-based pigments, isoindoline-based pigments, dioxazine-based pigments, thioindigo-based pigments, anthraquinone-based pigments, quinophthalone-based pigments, diketopyrrolopyrrole-based pigments, threne-based pigments, indigo-based pigments, phthalone-based pigments, methine-azomethine-based pigments, metal-complex-based pigments and the like.

It is also possible to use, as the pigment, a water-dispersed pigment or the like in which a pigment is finely and stably dispersed in an aqueous medium in advance using a surfactant and/or a resin.

Examples of the resin that disperses the pigment include polyamide, urethane resin, polyester, epoxy resin, melamine resin, phenol resin, silicone resin, polyvinyl alcohol, polyvinyl pyrrolidone, polyvinyl acetate, polyvinyl chloride, polyvinylidene chloride, polystyrene, acrylic acid resin, maleic acid resin, gum arabic, cellulose, dextran, casein, and derivatives thereof, copolymers of the above resins and the like.

Examples of the glitter pigment include a metallic luster pigment in which the surface of a core substance such as a glass piece is coated with gold, silver or the like, a pearl pigment in which the surface of a core substance such as natural mica, synthetic mica, or flaky aluminum oxide is coated with a metal oxide such as titanium oxide, a cholesteric liquid crystal type pigment, a metal powder pigment, a metal pigment obtained by peeling a metal deposited film such as aluminum formed on a base material such as a film, a metal pigment obtained by forming a metal deposited film such as aluminum on a colorless transparent or colored transparent film and performing powder treatment and the like.

Examples of the fluorescent pigment include synthetic resin fine particulate fluorescent pigments in which various fluorescent dyes are solid-soluted in a resin matrix.

As the light-storing pigment, general-purpose light-storing pigments are used as long as they have characteristics of absorbing and accumulating light rays of the sun and/or electric lamps, and gradually releasing and emitting light in a dark place (this is referred to as afterglow). Examples thereof include light-storing pigments such as CaS/Bi-based, CaSrS/Bi-based, ZnS/Cu-based, ZnCdS/Cu-based, and SrAl2O4/rare earth metal-based light-storing pigments.

The colorant may be used alone or in combination of two or more thereof.

When the above pigment is used as the colorant, a pigment dispersant may be used as necessary. Examples of the pigment dispersant include anionic and nonionic surfactants; anionic polymers such as polyacrylic acid and styrene-acrylic acid; and nonionic polymers such as PVP and PVA.

The dye or pigment mentioned above is effective even when used as it is, but a microcapsule pigment containing the dye or pigment in microcapsules, or resin particles containing the dye and/or pigment may also be used as the colorant. In particular, the dye or pigment is isolated and protected from the external environment by being encapsulated in a microcapsule, and the water resistance and light resistance of the inclusion can be improved.

The microcapsule pigment can be formed by encapsulating a colored body obtained by dispersing or dissolving the above-mentioned dye or pigment in an oily medium.

Examples of the oily medium include esters such as monobasic acid esters, dibasic acid monoesters, dibasic acid diesters, and partial or complete esters of polyhydric alcohols, aromatic hydrocarbons such as alkylbenzenes and alkylnaphthalenes, higher alcohols, ketones, ethers and the like.

The oily medium may be used alone or in combination of two or more thereof.

The microencapsulation of the microcapsule pigment includes conventionally known isocyanate-based interfacial polymerization methods, in-situ polymerization methods such as melamine-formalin polymerization methods, in-liquid curing coating methods, phase separation methods from aqueous solutions, phase separation methods from organic solvents, melt dispersion cooling methods, in-air suspension coating methods, and spray drying methods, and the method is appropriately selected according to the application. Examples of the material of the capsule include an epoxy resin, a urea resin, a urethane resin, an isocyanate resin and the like.

A secondary resin film may be further provided on the surface of the microcapsule according to the purpose to impart durability, or the surface properties may be modified and put to practical use.

Examples of the resin particles containing a dye include resin particles in which the above-mentioned dye is uniformly dissolved or dispersed in resin particles, and resin particles in which a dye is dyed on resin particles.

The resin constituting the resin particles is not particularly limited, and thermosetting resins are preferable.

Thermosetting resins are preferable because they are excellent in solvent resistance and heat resistance as compared with thermoplastic resins, and they are also excellent in migration resistance of the contained dye, and thus elution of the dye from the resin can be suppressed.

Of thermosetting resins, a guanamine resin or a melamine resin is preferable because elution of a dye can be further suppressed.

Examples of the resin particles containing a pigment include resin particles in which the above-mentioned pigment is homogeneously dispersed in resin particles, and resin particles in which surfaces of resin particles are coated with a pigment.

The resin constituting the resin particles is not particularly limited, and general-purpose resins may be used.

The resin particles may be produced by a pulverization method, a spray drying method, or a polymerization method in which the resin particles are polymerized in the presence of a dye or a pigment in an aqueous or oily medium. Examples of the polymerization method include a suspension polymerization method, a suspension polycondensation method, a dispersion polymerization method, and an emulsion polymerization method.

The shape of the resin particles is not particularly limited, and resin particles having a spherical shape such as a perfect spherical shape, an elliptical spherical shape, or a substantially spherical shape, a polygonal shape, or a flat shape may be used. Of these, spherical resin particles are preferably used.

When the colorant is a dye or a pigment, or the above-mentioned microcapsule pigment or resin particles, the content of the colorant relative to the total mass of the ink composition is not particularly limited, but is preferably within a range of 0.01 to 50% by mass, and more preferably 0.1 to 30% by mass. When the content of the colorant exceeds 50% by mass, the ink discharging properties of the writing instrument containing the ink composition is likely to degrade, and writing defects such as faint parts and line skipping are likely to occur. When the content is less than 0.01% by mass, it is difficult to obtain a suitable handwriting density as a writing instrument.

It is also possible to use, as the colorant, color-changing materials such as a thermochromic material that changes color due to a change in temperature and/or a photochromic material that changes color due to irradiation with light. These color changes may be reversible or irreversible. Since color changes can be repeatedly exhibited due to a change in temperature or irradiation with light, a reversible thermochromic material and/or a reversible photochromic material are preferable.

Examples of the reversible thermochromic material include a reversibly thermochromic composition containing (a) an electron-donating color-developing organic compound, (b) an electron-accepting compound, and (c) a reaction medium that determines the occurrence temperature of the color-developing reaction of the components (a) and (b).

As the reversibly thermochromic composition, a reversibly thermochromic composition of a heat-decoloring type having a characteristic of a relatively small hysteresis width (ΔH) (ΔH = 1 to 7°C) mentioned in JP-S51-44706 A, JP-S51-44707 A, JP-H01-29398 A and the like may be used. The heat-decoloring type means that the color disappears when heated and the color is developed when cooled. The reversibly thermochromic composition changes its color before and after a predetermined temperature (color-changing point) as a boundary and exhibits a decolored state in a temperature range of equal to or more than a high-temperature-side color-changing point and a color-developing state in a temperature range of equal to or less than a low-temperature-side color-changing point, and this reversibly thermochromic composition is present in only one specific state of the states in the normal temperature range, while the other state of the reversibly thermochromic composition is maintained while heat or cold required for the expression of the other state is applied, but when the application of heat or cold is eliminated, the composition returns to the state that is exhibited in the normal temperature range.

It is also possible to use, as the reversibly thermochromic composition, a reversibly thermochromic composition of a heat-decoloring type having a characteristic of a large hysteresis width (ΔH = 8 to 80°C) mentioned in JP-H04-17154 A, JP-H07-179777 A, JP-H07-33997 A, JP-H08-39936 A, JP-2005-1369 A and the like. The heat-decoloring type means that the color disappears when heated and the color is developed when cooled. This reversibly thermochromic composition changes the color following a greatly different path between when the temperature is raised from the lower temperature side than the discoloration temperature range and conversely when the temperature is lowered from the higher temperature side than the discoloration temperature range in the shape of a curve obtained by plotting a change in color development density due to a change in temperature, and the color-developing state in a temperature range of a complete color development temperature t₁ or less, or the decolored state in a high temperature range of a complete decoloring temperature t₄ or higher has color memory properties in a specific temperature range [temperature range between a color-development start temperature t₂ and a decoloring start temperature t₃, that is, (substantially two-phase holding temperature range)].

When a reversibly thermochromic composition having the above color-memory property is applied to the embodiments of the present invention, as the reversibly thermochromic composition, specifically, the complete color development temperature t₁ is specified to a temperature that can be obtained only in a freezing room, a cold district or the like, and the complete decoloring temperature t₄ is specified to a range of a temperature that can be obtained from a familiar heating body such as a frictional heat by a friction body, a hair dryer or the like, and by specifying the ΔH value to be 40 to 100°C, the reversibly thermochromic composition can effectively function for keeping a color exhibited in a normal state (daily life temperature range).

The temperature that can be obtained only in a freezing room, a cold district or the like is within a range of -50 to 0°C, preferably -40 to -5°C, and more preferably -30 to -10°C. The temperature obtained from a familiar heating body such as a hair dryer is within a range of 50 to 95°C, preferably 50 to 90°C, and more preferably 60 to 80°C.

As the reversibly thermochromic composition, a reversibly thermochromic composition of a heat-color-developing type using a gallic acid ester mentioned in JP-S51-44706 A, JP-2003-253149 A or the like may also be used. The heat-color-developing type means that the color develops when heated and the color disappears when cooled.

The reversibly thermochromic composition is a phase solution containing the above-mentioned components (a), (b), and (c) as essential components, and the ratio of each component depends on the density, color-changing temperature, color-changing form, and type of each component. In general, the component ratio at which desired characteristics are obtained is within a range of 0.1 to 100, preferably 0.1 to 50, and more preferably 0.5 to 20 for the component (b), and 1 to 800, preferably 5 to 200, and more preferably 10 to 100 for the component (c), relative to 1 of the component (a) (all of these proportions are parts by mass).

Examples of the reversible photochromic material include photochromic compounds such as conventionally known spirooxazine derivatives, spiropyran derivatives, naphthopyran derivatives and the like which develop color when irradiated with sunlight, ultraviolet light, or blue light having a peak emission wavelength within a range of 400 to 495 nm and decolor when the irradiation is stopped.

Examples of the spirooxazine derivative include conventionally known indolino spirobenzoxazine-based compounds, indolino spironaphthoxazine-based compounds, indolino spirophenanthrooxazine-based compounds, indolino spiroquinolinooxazine-based compounds and the like.

Further, examples of the photochromic compound having a photo-memory property (color-memory photochromic property) include conventionally known fulgide derivatives, diarylethene derivatives and the like.

It is also possible to use, as the reversible photochromic material, a reversibly photochromic composition obtained by dissolving the photochromic compound in various oligomers may also be used.

Examples of the oligomer include a styrene-based oligomer, an acryl-based oligomer, a terpene-based oligomer, and a terpene phenol-based oligomer.

Examples of the styrene-based oligomer include low molecular weight polystyrene, a styrene-α-methylstyrene copolymer, an α-methylstyrene polymer, a copolymer of α-methylstyrene and vinyltoluene and the like.

Examples of the acrylic oligomer include an acrylic acid ester copolymer and the like.

Examples of the terpene-based oligomer include an α-pinene polymer, a β-pinene polymer, a d-limonene polymer and the like.

Examples of the terpene phenol-based oligomer include an α-pinene-phenol copolymer and the like.

By dissolving the photochromic compound in various oligomers, the light resistance of the photochromic compound can be improved, the color-development density can be improved, and the color-changing sensitivity can be adjusted.

The oligomers may be used alone or in combination of two or more thereof.

The reversibly thermochromic composition or the reversibly photochromic composition mentioned above is effective even when used as it is, but they may also be used as a colorant to be applied to the embodiments of the present invention by encapsulating the composition in microcapsules to form a reversibly thermochromic microcapsule pigment or a reversibly photochromic microcapsule pigment, or dispersing the composition in a thermoplastic resin or a thermosetting resin to form reversibly thermochromic resin particles or reversibly photochromic resin particles.

Hereinafter, the reversibly thermochromic microcapsule pigment and the reversibly photochromic microcapsule pigment may be referred to as "microcapsule pigment", and the reversibly thermochromic resin particles and the reversibly photochromic resin particles may be referred to as "resin particles".

The reversibly thermochromic composition or the reversibly photochromic composition is preferably encapsulated in microcapsules to form a reversibly thermochromic microcapsule pigment or a reversibly photochromic microcapsule pigment. This is because a chemically and physically stable microcapsule pigment can be formed by being encapsulated in microcapsules, and further, the reversibly thermochromic composition or the reversibly photochromic composition can be maintained at the same composition under various use conditions, and the same action and effect can be exhibited.

The microencapsulation includes conventionally known isocyanate-based interfacial polymerization methods, in-situ polymerization methods such as melamine-formalin polymerization methods, in-liquid curing coating methods, phase separation methods from aqueous solutions, phase separation methods from organic solvents, melt dispersion cooling methods, in-air suspension coating methods, and spray drying methods, and the method is appropriately selected according to the application. Examples of the material of the capsule include an epoxy resin, a urea resin, a urethane resin, an isocyanate resin and the like.

Further, a secondary resin film may be further provided on the surface of the microcapsule according to the purpose to impart durability, or the surface properties may be modified and put to practical use.

In the microcapsule pigment, the mass ratio of the inclusion: the wall film is preferably 7:1 to 1:1, and when the mass ratio of the inclusion and the wall film is within the above range, it is possible to prevent a decrease in color density and sharpness at the time of color development. More preferably, the mass ratio of the inclusion: the wall film is 6:1 to 1:1.

Mixing a non-color-changing colorant such as a general dye or pigment in the microcapsule pigment allows the microcapsule pigment to exhibit a color-changing behavior from a color (1) to a color (2).

When the colorant is the above-mentioned color-changing material, the content of the colorant relative to the total mass of the ink composition is not particularly limited, but is preferably within a range of 5 to 40% by mass, more preferably 10 to 40% by mass, and still more preferably 15 to 35% by mass. When the content of the colorant exceeds 40% by mass, the ink discharging properties of the writing instrument containing the ink composition degrades, and writing defects such as faint parts and line skipping are likely to occur. When the content is less than 5% by mass, it is difficult to obtain suitable color-changing property and handwriting density as a writing instrument, and it is difficult to sufficiently satisfy the color-changing function.

The average particle diameter of the reversibly thermochromic microcapsule pigment or resin particles or the reversibly photochromic microcapsule pigment or resin particles is preferably within a range of 0.01 to 5 µm, more preferably 0.1 to 3 µm, and still more preferably 0.5 to 3 µm. When the average particle diameter of the microcapsule pigment or resin particles is more than 5 µm, it is difficult to obtain satisfactory ink discharging properties when the microcapsule pigment or resin particles are used for a writing instrument. When the average particle diameter is less than 0.01 µm, it is difficult to exhibit high-density color-development property.

In the measurement of the average particle size, the region of the particles is determined using image analysis type particle size distribution measurement software [manufactured by MOUNTECH Co., Ltd., product name: Mac-View], the projected area circle-equivalent diameter (Heywood diameter) is calculated from the area of the region of the particles, and the average particle size is measured as an average particle size of particles equivalent to an equal volume sphere based on the calculated value.

When the particle size of all or most of the particles exceeds 0.2 µm, the average particle size of particles equivalent to an equal volume sphere may also be measured by a Coulter method using a particle size distribution measuring apparatus [manufactured by Beckman Coulter K.K., product name: Multisizer 4e].

Further, the volume-based particle size and the average particle size may be measured using a calibrated laser diffraction/scattering particle size distribution measuring apparatus [manufactured by HORIBA, Ltd., product name: LA-300], based on the numerical value measured using the software or the measuring apparatus for the Coulter method mentioned above.

The ink composition according to the embodiments of present invention may be mixed with optional components, in addition to the essential components mentioned above, as long as the effects of the embodiments of the present invention are not lost.

The ink composition according to the embodiments of the present invention may be mixed with a thickener, so that aggregation and settling of the pigment can be suppressed, and an ink composition having satisfactory temporal stability can be obtained.

As the thickener, a conventionally known substance may be used, but it is preferable to use a substance capable of imparting shear thinning to the ink composition (shear thinning agent).

The ink composition using the shear thinning agent is difficult to flow with high viscosity in a standing state or when the stress is low, and the viscosity is easily lowered when stress is applied from the outside. Thus, it is possible to prevent leakage of the ink and to prevent separation and backflow of the ink at the time of non-writing, and it is easy to improve ink discharge stability from the pen tip at the time of writing.

In particular, when such an ink composition is used in a writing instrument (ballpoint pen) equipped with a ballpoint pen tip as a pen tip, the ink composition has a high viscosity at the time of standing without application of shear stress, and thus the ink composition is stably kept in the ballpoint pen. Thus, at the time of writing, a strong shear stress is applied to the ink composition with rotation of the ball, and the viscosity of the ink composition in the vicinity of the ball is easily reduced, and thus the ink discharge stability can be improved.

When the ink composition according to the embodiments of the present invention contains a thickener, the content of the thickener relative to the total mass of the ink composition is not particularly limited, but is preferably within a range of 0.1 to 20% by mass.

Examples of the shear thinning agent include water-soluble polysaccharides, polymers containing an alkyl ester of methacrylic acid as a main component and having a molecular weight of 100,000 to 150,000, poly-N-vinyl carboxylic acid amide crosslinked products, benzylidene sorbitol and derivatives thereof, benzylidene xylitol and derivatives thereof, alkali thickened acrylic resins, crosslinkable acrylic acid polymers, inorganic fine particles, nonionic surfactants having an HLB value of 8 to 12, and metal salts and amine salts of dialkyl sulfosuccinic acid.

The shear thinning agent may be used alone or in combination of two or more thereof.

Examples of the water-soluble polysaccharide include xanthan gum, welan gum, zetasea gum, diutan gum, macrohomopsis gum, succinoglycan (having an average molecular weight of about 1,000,000 to 8,000,000) in which the constituent monosaccharide is an organic acid-modified heteropolysaccharide of glucose and galactose, guar gum, locust bean gum, and derivatives thereof, hydroxyethyl cellulose, alginic acid alkyl esters, glucomannan, and carbohydrates having gelling ability extracted from seaweed such as agar and carrageenan.

The ink composition according to the embodiments of the present invention may be mixed with a polymer aggregating agent. The polymer aggregating agent creates a gentle bridging action between pigments and the pigment forms a gentle aggregate via the polymer aggregating agent, and thus direct aggregation of the pigments can be suppressed, leading to an improvement in dispersion stability of the pigment.

The polymer aggregating agent has the effect of suppressing the settling of the pigment in the ink composition in a capillary gap of an ink occlusion body provided in a marking pen mentioned below. Therefore, the ink composition mixed with a polymer aggregating agent is preferably applied to a marking pen equipped with an ink occlusion body.

The polymer aggregating agent can also be used in combination with the above-mentioned dispersant. When both a polymer aggregating agent and a dispersant are used in combination, the dispersibility of the loose aggregates formed via the polymer aggregating agent can be improved.

When the ink composition according to the embodiments of the present invention contains a polymer aggregating agent, the content of the polymer aggregating agent relative to the total mass of the ink composition is not particularly limited, but is preferably within a range of 0.05 to 1% by mass.

Examples of the polymer aggregating agent include polyvinylpyrrolidone, polyethylene oxide, water-soluble polysaccharides and the like.

Examples of the water-soluble polysaccharide include tragacanth gum, guar gum, pullulan, cyclodextrin, a water-soluble cellulose derivative and the like.

Examples of the water-soluble cellulose derivative include carboxymethyl cellulose, methyl cellulose, hydroxyethyl cellulose, hydroxypropyl cellulose, hydroxyethyl methyl cellulose, hydroxypropyl methyl cellulose and the like.

The ink composition according to the embodiments of the present invention may be mixed with a surfactant, which can adjust the surface tension of the ink composition to an appropriate range.

Examples of the surfactant used for adjusting the surface tension include a nonionic surfactant, an anionic surfactant, a cationic surfactant, an amphoteric surfactant and the like, and any of them may be suitably used.

Examples of the surfactant used for adjusting the surface tension include a silicone-based surfactant, a surfactant having an acetylene bond in the structure, a fluorine-based surfactant and the like, and these surfactants are appropriately selected according to the components of the ink composition, applications and the like.

When the ink composition according to the embodiments of the present invention contains a surfactant used for adjusting the surface tension, the content of the surfactant used for adjusting the surface tension relative to the total mass of the ink composition is not particularly limited, but is preferably within a range of 0.01 to 2% by mass, and more preferably 0.05 to 1% by mass.

The ink composition according to the embodiments of the present invention may be mixed with a pH adjusting agent, which can adjust the pH of the ink composition to an appropriate range. As the pH adjusting agent, various acidic substances and basic substances may be used.

Examples of the acidic substance include hydrochloric acid, sulfuric acid, nitric acid, phosphoric acid, carbonic acid, boric acid, lactic acid, citric acid, tartaric acid, malic acid and the like.

Examples of the basic substance include ammonia, sodium carbonate, sodium hydrogen phosphate, potassium hydrogen phosphate, sodium hydroxide, potassium hydroxide, sodium acetate and the like, and alkanolamines such as monoethanolamine, diethanolamine, and triethanolamine may also be applied.

When the ink composition according to the embodiments of the present invention contains a pH adjusting agent, the content of the pH adjusting agent relative to the total mass of the ink composition is not particularly limited, but is preferably within a range of 0.1 to 5% by mass, and more preferably 0.5 to 2% by mass.

When the solvent applied to the embodiments of the present invention is water, it is possible to mix a water-soluble organic solvent compatible with water, which can suppress evaporation of moisture from the pen tip of the writing instrument.

Examples of the water-soluble organic solvent include ethanol, propanol, butanol, glycerin, sorbitol, triethanolamine, diethanolamine, monoethanolamine, ethylene glycol, diethylene glycol, thioethylene glycol, polyethylene glycol, propylene glycol, butylene glycol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monobutyl ether, ethylene glycol monomethyl ether acetate, sulfolane, 2-pyrrolidone, N-methyl-2-pyrrolidone and the like.

The water-soluble organic solvent may be used alone or in combination of two or more thereof.

When the ink composition according to the embodiments of the present invention contains a water-soluble organic solvent, the content of the water-soluble organic solvent relative to the total mass of the ink composition is not particularly limited, but is preferably within a range of 1 to 40% by mass, more preferably 5 to 30% by mass, and still more preferably 10 to 25% by mass. When the content of the water-soluble organic solvent exceeds 40% by mass, the ink viscosity is likely to increase, the ink discharging properties of the writing instrument containing the ink composition deteriorate, and writing defects such as faint parts and line skipping are likely to occur. When the content is less than 1% by mass, the effect of suppressing moisture evaporation is poor.

The ink composition according to the embodiments of the present invention may be mixed with, for example, a water-soluble resin such as an alkyd resin, an acrylic resin, a styrene-maleic acid copolymer, a cellulose derivative, polyvinylpyrrolidone, polyvinyl alcohol, dextrin or the like, which can also impart fixability to the paper surface and viscosity.

The water-soluble resin may be used alone or in combination of two or more thereof.

When the ink composition according to the embodiments of the present invention contains a water-soluble resin, the content of the water-soluble resin relative to the total mass of the ink composition is not particularly limited, but is preferably within a range of 1 to 30% by mass, and more preferably 1 to 10% by mass.

The ink composition according to the embodiments of the present invention may be mixed with various additives as necessary.

Examples of the additive include an antirust agent, an antiseptic agent or an antifungal agent, a bubble absorber, a wetting agent, an antifoaming agent, a specific gravity regulator and the like.

Examples of the antirust agent include dicyclohexylammonium nitrite, diisopropylammonium nitrite, saponin and the like.

Examples of the antiseptic agent or antifungal agent include carbolic acid, a sodium salt of 1,2-benzothiazoline-3-one, sodium benzoate, sodium dehydroacetate, potassium sorbate, propyl parahydroxybenzoate, 2,3,5,6-tetrachloro-4-(methylsulfonyl)pyridine and the like.

Examples of the bubble absorber include ascorbic acids, erythorbic acids, α-tocopherol, catechins, synthetic polyphenols, kojic acid, alkylhydroxylamines, oxime derivatives, α-glucosylrutin, α-lipoic acid, phosphonate, phosphinate, sulfite, sulfoxylate, dithionite, thiosulfate, thiourea dioxide and the like.

Examples of the wetting agent include reduced or non-reduced starch hydrolysates, disaccharides such as trehalose, oligosaccharides, sucrose, cyclodextrin, glucose, dextrin, sorbitol, mannitol, sodium pyrophosphate and the like.

When the ink composition according to the embodiments of the present invention is stored in a writing instrument (ballpoint pen) equipped with a ballpoint pen tip, the ink composition may be mixed with a lubricant.

The lubricant improves lubricity between a ball receiving seat provided inside a chip main body and a ball provided at the front end of the chip main body, can easily prevent wear of the ball receiving seat, and can improve writing performance.

Examples of the lubricant include higher fatty acids such as oleic acid, nonionic surfactants having a long chain alkyl group, polyether-modified silicone oils and the like.

A method for producing the ink composition according to the embodiments of the present invention is not particularly limited, and any conventionally known method may be used.

Specifically, the ink composition may be produced by stirring a mixture containing the above components with various stirrers such as propeller stirring, homodisper, or homomixer, or by dispersing the mixture with various dispersers such as a bead mill.

In the ink composition according to the embodiments of the present invention, viscosity characteristics are not particularly limited. For example, an ink composition having viscosity characteristics, such as an ink composition having high shear thinning (gel ink), an ink composition having low viscosity and low shear thinning, and an ink composition having low viscosity and non-shear thinning (Newtonian ink) may be used. The guanine pigment applied to the embodiments of the present invention is excellent in dispersion stability, and even when the ink composition has a low viscosity, the pigment hardly settles, and thus an ink composition having a low viscosity is suitably used as the ink composition according to the embodiments of the present invention.

When the ink composition according to the embodiments of the present invention is used for a ballpoint pen, the viscosity is preferably in the following range as measured under the condition of a rotation speed of 1 rpm (shear rate of 3.84 sec⁻¹) in an environment of 20°C because the dispersion stability of the pigment can be further stabilized. Specifically, the viscosity of the ink composition in this case is preferably within a range of 1 to 2,000 mPa·s, more preferably 10 to 1,500 mPa·s, and still more preferably 100 to 1,000 mPa·s.

The viscosity is preferably in the following range as measured under the condition of a rotation speed of 100 rpm (shear rate of 384 sec⁻¹) in an environment of 20°C because the ink discharge properties from the pen tip of the ballpoint pen can be improved. Specifically, the viscosity of the ink composition in this case is preferably within a range of 1 to 200 mPa·s, more preferably 10 to 100 mPa·s, and still more preferably 20 to 50 mPa·s.

When the viscosity of the ink composition is within the above range, the dispersion stability of the pigment and the easy fluidity of the ink in the mechanism of the ballpoint pen can be maintained at a high level.

The viscosity of the ink composition is a value measured using a rheometer [manufactured by TA Instruments, product name: Discovery HR-2, cone plate (diameter 40 mm, Angle 1°)] under the condition of a rotation speed of 1 rpm (shear rate of 3.84 sec⁻¹) or a rotation speed of 100 rpm (shear rate of 384 sec⁻¹) with the ink placed in an environment of 20°C.

When the ink composition according to the embodiments of the present invention is used in a marking pen, the viscosity thereof is preferably in the following range as measured under an environment of 20°C and under a condition of a rotation speed of 50 rpm because the fluidity of the ink and the dispersion stability of the pigment can be maintained at a high level. Specifically, the viscosity of the ink composition in this case is preferably within a range of 1 to 30 mPa·s, more preferably 1 to 20 mPa·s, and still more preferably 1 to 10 mPa·s.

The viscosity of the ink composition is a value measured by placing the ink composition under an environment of 20°C using an E-type rotational viscometer [manufactured by Toki Sangyo Co., Ltd., product name: RE-85 L, cone-type rotor: standard type (1°34' × R24)].

When the ink composition according to the embodiments of the present invention is used for a ballpoint pen or a marking pen, the pH thereof is preferably within a range of 6 to 10, and more preferably 7 to 9. When the pH is within the above range, an increase in excessive viscosity and deterioration of the ink composition can be suppressed.

The pH of the ink composition is a value measured by placing the ink under an environment of 20°C using a pH meter [manufactured by DKK-TOA CORPORATION, product name: IM-40S].

When the ink composition according to the embodiments of the present invention is used for a ballpoint pen, the structure and shape of the ballpoint pen itself are not particularly limited, and for example, a ballpoint pen refill or a ballpoint pen including a ballpoint pen tip and an ink filling mechanism is filled with the ink composition.

The ballpoint pen tip includes a tip main body and a ball provided at the front end of the tip main body. Examples of the ballpoint pen tip include a tip obtained by holding a ball in a ball holding part obtained by pressing and deforming the vicinity of a tip of a tip main body made of a metal pipe inward from an outer surface, a tip obtained by holding a ball in a ball holding part formed by cutting a tip main body made of a metal material by a drill or the like, a tip provided with a ball receiving seat made of resin inside a metal or plastic tip main body, and a tip obtained by biasing a ball held in the tip forward by a spring body.

The material of the chip main body and the ball is not particularly limited, and examples thereof include cemented carbide, stainless steel, ruby, ceramic, resin, rubber and the like. Further, the ball may be subjected to a surface treatment such as DLC coating.

The diameter of the ball is generally within a range of 0.2 to 3 mm, preferably 0.2 to 2 mm, more preferably 0.2 to 1.5 mm, and still more preferably 0.2 to 1 mm.

Examples of the ink filling mechanism include an ink container that can be directly filled with ink.

As the ink container, for example, a molded body made of a thermoplastic resin such as polyethylene, polypropylene, polyethylene terephthalate, or nylon, or a metal tubular body is used.

A ballpoint pen refill (hereinafter, sometimes referred to as "refill") may be formed by directly connecting a ballpoint pen tip to the ink container or via a connecting member and directly filling the ink container with the ink. A ballpoint pen may be formed by containing the refill in a barrel.

The back end of the ink filled in the ink container is filled with an ink backflow inhibitor. Examples of the ink backflow inhibitor include a liquid plug or a solid plug.

The liquid plug is made of a nonvolatile liquid and/or a hardly volatile liquid, and examples thereof include petrolatum, spindle oil, castor oil, olive oil, refined mineral oil, liquid paraffin, polybutene, α-olefin, oligomer or cooligomer of α-olefin, dimethyl silicone oil, methyl phenyl silicone oil, amino-modified silicone oil, polyether-modified silicone oil, fatty acid-modified silicone oil and the like.

The nonvolatile liquid and/or the hardly volatile liquid may be used alone or in combination of two or more thereof.

It is preferable to add a thickener to the nonvolatile liquid and/or the hardly volatile liquid to thicken the viscosity to a suitable viscosity.

Examples of the thickener include clay-based thickeners such as silica whose surface is hydrophobically treated, fine particle silica whose surface is methylated, aluminum silicate, swellable mica, hydrophobically treated bentonite and montmorillonite; fatty acid metal soaps such as magnesium stearate, calcium stearate, aluminum stearate, and zinc stearate; tribenzylidene sorbitol; fatty acid amide; amide-modified polyethylene wax; hydrogenated castor oil; and dextrin-based compounds such as fatty acid dextrin; cellulose-based compounds and the like.

Examples of the solid plug include solid plugs made of polyethylene, polypropylene, polymethylpentene and the like.

As the ink backflow inhibitor, the liquid plug and the solid plug mentioned above may be used in combination.

A ballpoint pen including a ballpoint pen tip and an ink filling mechanism may be formed by using the barrel itself as an ink filling mechanism, directly filling the barrel with ink, and attaching a ballpoint pen tip to the front end of the barrel.

When the ink to be filled in the ink filling mechanism has a low viscosity, the ballpoint pen including the ballpoint pen tip and the ink filling mechanism may further include an ink supplying mechanism for supplying the ink to be filled in the ink filling mechanism to the pen tip.

The ink supplying mechanism is not particularly limited, and examples thereof include (1) a mechanism in which an ink guide core formed of fiber bundles or the like is provided as an ink flow rate regulator and the ink is supplied to a pen tip through the ink guide core, (2) a mechanism in which a comb-groove-shaped ink flow regulator is provided and the ink is supplied to the pen tip through the ink flow regulator, and (3) a mechanism in which the ink is supplied to the pen through a pen core in which: a large number of disk bodies are disposed in parallel at intervals in a comb groove shape; a slit-shaped ink guide groove penetrating the disk body in the axial direction and a ventilation groove having a larger width than the groove are provided; and an ink guide core for guiding the ink from the ink filling mechanism to the pen tip is disposed at an axial center.

The material of the pen core is not particularly limited as long as it is a synthetic resin capable of injection-molding a large number of disk bodies into a comb groove-shaped structure. Examples of the synthetic resin include general-purpose polycarbonate, polypropylene, polyethylene, and an acrylonitrile-butadiene-styrene copolymer (ABS resin). In particular, an acrylonitrile-butadiene-styrene copolymer (ABS resin) is suitably used because it has high moldability and easily obtains pen core performance.

When the ballpoint pen includes the ink supplying mechanism, an ink occlusion body that can be filled with ink may be used as the ink filling mechanism in addition to the ink container and the barrel mentioned above.

The ink occlusion body is a fiber bundle body in which crimped fibers are bundled in the longitudinal direction, and is configured by incorporating the crimped fibers in a covering body such as a plastic cylinder or a film and adjusting the porosity so as to be within a range of about 40 to 90%.

A ballpoint pen refill including a ballpoint pen tip, an ink filling mechanism, and an ink supplying mechanism may be formed by containing an ink occlusion body impregnated with ink in an ink container, providing an ink supplying mechanism at a front end of the ink container so as to be connected to the ink occlusion body, and connecting a ballpoint pen tip to the ink supplying mechanism directly or via a connection member so as to be connected to the ink supplying mechanism. Alternatively, a ballpoint pen refill may also be formed by containing an ink occlusion body impregnated with ink in an ink container, providing an ink supplying mechanism inside the ink container so as to be connected to the ink occlusion body, and connecting the ballpoint pen tip to the ink container directly or via a connection member so as to be connected to the ink supplying mechanism.

Specific examples of the configuration of the ballpoint pen containing the ink composition according to the embodiments of the present invention include: (1) a ballpoint pen including an ink container filled with ink in a barrel, in which a ballpoint pen tip is connected to the ink container directly or via a connecting member, and an ink backflow inhibitor is filled at an end surface of the ink; (2) a ballpoint pen including a mechanism in which a barrel is directly filled with ink and the ink is supplied to a pen tip by interposing a comb-shaped ink flow rate regulator or an ink guide core composed of a fiber bundle or the like interposed as an ink flow rate regulator; (3) a ballpoint pen including a mechanism in which a barrel is directly filled with ink and the ink is supplied to a pen tip via the pen core mentioned above; and (4) a ballpoint pen including an ink occlusion body impregnated with ink in a barrel, in which a mechanism for supplying the ink to a pen tip by interposing an ink guide core composed of a fiber bundle or the like as an ink flow rate regulator is provided.

When the ink composition according to the embodiments of the present invention is used for a marking pen, the structure and shape of the marking pen itself are not particularly limited, and for example, a marking pen refill or a marking pen including a marking pen tip and an ink filling mechanism is filled with the ink composition.

As the marking pen tip, for example, a general-purpose porous member having communicating pores selected from a range of around 30 to 70% in porosity, such as a fiber resin processed product, a hotmelt fiber fusion processed product, and a felt product, or an extruded product of a synthetic resin having a plurality of ink lead-out holes extending in the axial direction can be exemplified, and one end thereof is processed into a shape according to a purpose such as a cannonball shape, a rectangular shape, and a chisel shape and put to practical use.

Examples of the ink filling mechanism include an ink occlusion body that can be filled with ink.

The ink occlusion body is a fiber bundle body in which crimped fibers are bundled in the longitudinal direction, and is configured by incorporating the crimped fibers in a covering body such as a plastic cylinder or a film and adjusting the porosity to be within a range of about 40 to 90%.

A marking pen may be formed by containing the ink occlusion body impregnated with ink in a barrel and connecting the marking pen tip to the barrel directly or via a connecting member so as to be connected to the ink occlusion body.

A marking pen refill (hereinafter sometimes referred to as "refill") may be formed by containing an ink occlusion body impregnated with ink in an ink container and connecting a marking pen tip to the ink container directly or via a connecting member so as to be connected to the ink occlusion body. A marking pen may be formed by containing the refill in a barrel.

As the ink container, for example, a molded body made of a thermoplastic resin such as polyethylene, polypropylene, polyethylene terephthalate, or nylon, or a metal tubular body is used.

The marking pen including the marking pen tip and the ink filling mechanism may further include an ink supplying mechanism for supplying the ink composition to be filled in the ink filling mechanism to the pen tip.

The ink supplying mechanism is not particularly limited, and examples thereof include (4) a mechanism including an ink flow rate regulator with a valve opening mechanism and supplying ink to the pen tip, in addition to the above-mentioned ink supplying mechanism included in the ballpoint pen.

As the valve mechanism, a general-purpose pumping type valve mechanism that is opened by pressing a tip may be used, and a valve mechanism that is set to a spring pressure that can be pressed and opened by pen pressure is preferable.

When the marking pen includes the ink supplying mechanism, an ink container that can be directly filled with ink may be used as the ink filling mechanism in addition to the above-mentioned ink occlusion body. Alternatively, the barrel itself may be used as an ink filling mechanism to directly fill the barrel with the ink.

A marking pen refill including a marking pen tip, an ink filling mechanism, and an ink supplying mechanism may be formed by containing an ink occlusion body impregnated with ink in an ink container, providing an ink supplying mechanism at a front end of the ink container so as to be connected to the ink occlusion body, and connecting a marking pen tip to the ink supplying mechanism directly or via a connection member so as to be connected to the ink supplying mechanism. Alternatively, a marking pen refill may also be formed by containing an ink occlusion body impregnated with ink in an ink container, providing an ink supplying mechanism inside the ink container so as to be connected to the ink occlusion body, and connecting the marking pen tip to the ink container directly or via a connection member so as to be connected to the ink supplying mechanism.

Specific examples of the configuration of the marking pen containing the ink composition according to the embodiments of the present invention include (1) a marking pen in which an ink occlusion body composed of a fiber bundle impregnated with ink is contained in a barrel, and a marking pen tip composed of a fiber processed body or a resin molded body in which a capillary gap is formed is connected to the barrel directly or via a connecting member such that the ink occlusion body and the tip are connected to each other, (2) a marking pen in which a barrel is directly filled with ink, and a mechanism for supplying ink to a pen tip by interposing an ink guide core composed of a comb-groove-shaped ink flow rate regulator, a fiber bundle or the like as an ink flow rate regulator is provided, (3) a marking pen in which a barrel is directly filled with ink, and a mechanism for supplying ink to a pen tip via the above-mentioned pen core is provided, (4) a marking pen including a tip and an ink container via a valve mechanism that opens a valve by pressing the tip, the ink container being directly filled with the ink, and (5) a marking pen including an ink container in which an ink occlusion body formed of a fiber bundle impregnated with ink is contained in a barrel, in which a marking pen tip formed of a fiber processed body or a resin molded body in which a capillary gap is formed is connected to the ink container directly or via a connecting member such that the ink occlusion body and the tip are connected.

When the ballpoint pen or the marking pen according to the embodiments of the present invention is directly filled with ink, in order to facilitate redispersion of the pigment, a stirring body such as a stirring ball for stirring the ink may be incorporated in the ink container or the barrel to be filled with the ink. Examples of the shape of the stirring body include a spherical body and a rod body. The material of the stirring body is not particularly limited, and examples thereof include metal, ceramic, resin, and glass.

Further, the writing instrument such as a ballpoint pen or a marking pen according to the embodiments of the present invention may have an ink cartridge form as a detachable structure. In this case, after the ink contained in the ink cartridge of the writing instrument is used up, the ink cartridge can be replaced with a new ink cartridge, and thus the writing instrument can be used again.

As the ink cartridge, an ink cartridge that also serves as a barrel constituting the writing instrument by being connected to a writing instrument main body, or an ink cartridge that covers and protects the barrel (rear shaft) after being connected to the writing instrument main body is used. In the latter case, the ink cartridge may be used alone, or the writing instrument before use may have a structure in which the writing instrument body and the ink cartridge are connected, or a structure in which the ink cartridge is contained in the barrel in a non-connected state so that a user of the writing instrument starts use by connecting the ink cartridge in the barrel at the time of use.

Further, the writing instrument such as a ballpoint pen or a marking pen according to the embodiments of the present invention is provided with a cap attached to cover a pen tip (writing tip part) to form a cap-type writing instrument, with which it is possible to prevent the pen tip from being dried and becoming unable to perform writing and to prevent the writing tip part from being contaminated or damaged.

The writing instrument such as a ballpoint pen or a marking pen in which a refill is contained in a barrel may be formed into a retractable writing instrument by providing a retractable mechanism in the barrel, the retractable mechanism enabling the writing tip part to be retracted from the barrel, with which the writing tip part can be prevented from being contaminated or damaged.

The retractable writing instrument may be used as long as the writing tip part is contained in the barrel in a state where the writing tip part is exposed to the outside air, and the writing tip part protrudes from the barrel opening by the operation of the retractable mechanism.

It is also possible to provide a composite type retractable writing instrument in which a plurality of refills are contained in a barrel and the writing tip part of any of the refills is caused to protrude and retract from a barrel opening by the operation of the retractable mechanism.

As the retractable mechanism, for example, (1) a side slide type retractable mechanism in which an operation part (clip) movable in a front-rear direction from a rear side wall of a barrel is protruded outward in a radial direction, and a writing tip part is retracted from a barrel front end opening by sliding the operation part forward, (2) a rear end knock type retractable mechanism in which a writing tip part is retracted from a barrel front end opening by pressing an operation part provided at the rear end of the barrel forward, (3) a side knock type retractable mechanism in which the writing tip part is retracted from a barrel front end opening by pressing an operation part protruding from the outer surface of the barrel side wall inward in the radial direction, and (4) a rotary type retractable mechanism in which a writing tip part is retracted from a barrel front end opening by rotating an operation part provided at a rear of the barrel.

Further, the form of the ballpoint pen and the marking pen is not limited to the above configuration, and may be a composite writing instrument (a double-headed writing instrument, a pen tip retractable writing instrument or the like) in which tips of different forms are mounted, tips for deriving inks of different color tones or hues are mounted, or tips of different forms are mounted and color tones or hues of inks derived from the respective tips are different from each other.

When a reversibly thermochromic composition, a reversibly thermochromic microcapsule pigment, a reversibly thermochromic resin particle or the like is used as the colorant, the handwriting formed on the writing surface using the writing instrument containing the ink composition according to the embodiments of the present invention can change its color by rubbing with a finger or by a heating tool or a cooling tool.

Examples of the heating tool include an electric heating and color-changing tool equipped with a resistance heating element such as a PTC device, a heat color-changing tool filled with a medium such as hot water, a heating and color-changing tool using steam, laser light or the like, and application of a hair dryer. A friction member and a friction body are preferable because color change can be achieved by a simple method.

Examples of the cooling tool include application of an electric cooling and color-changing tool using a Peltier device, a cooling and color-changing tool filled with a refrigerant such as cold water and/or an ice piece, a storage cooling agent, a refrigerator, or a freezer.

As the friction member and the friction body, an elastic body such as an elastomer, a plastic foam or the like, which is rich in elastic feeling and can generate appropriate friction at the time of rubbing to generate frictional heat, is preferable, but a plastic molded body, a stone, wood, metal, fabric or the like may also be used.

A common eraser used for erasing handwriting with a pencil may be used to scrub the handwriting, but with the eraser, eraser dust is generated during the scrubbing. Thus, the friction member and the friction body from which eraser dust is hardly generated are suitably used.

Examples of the material of the friction member and the friction body include silicone resin and styrene-ethylene-butadiene-styrene block copolymer (SEBS resin). With silicon resin, the resin easily adheres to the part erased by rubbing, and the handwriting tends to be repelled when writing is repeated. Thus, SEBS resin is more suitably used.

The friction member or the friction body may be a member having any shape separated from the writing instrument, but it is possible to achieve excellent portability by providing the friction member or the friction body in the writing instrument. A writing instrument set may also be obtained by combining the writing instrument with a friction member or a friction body having any shape separated from the writing instrument.

When the writing instrument is a writing instrument equipped with a cap, a place where the friction member or the friction body is provided is not particularly limited. For example, the cap itself may be formed of a friction member, the barrel itself may be formed of a friction member, or when a clip is provided, the clip itself may be formed of a friction member, or the friction member or the friction body may be provided at a cap tip part (top part), a barrel rear end part (part not provided with a writing tip part) or the like.

When the writing instrument is a writing instrument equipped with a retractable mechanism, a place where the friction member or the friction body is provided is not particularly limited. For example, when a barrel itself is formed of a friction member, or a clip is further provided, the clip itself may be formed of the friction member, or the friction member or the friction body may be provided in the vicinity of a barrel opening, a barrel rear end (a part not provided with a writing front end), or a knock part.

The ink composition according to the embodiments of the present invention can be used for purposes other than writing instruments. For example, the ink composition can be used as printing ink used for screen printing, offset printing, process printing, gravure printing, coater printing, pad printing and the like; paints used for brush coating, spray coating, electrostatic coating, electrodeposition coating, flow coating, roller coating, dip coating and the like; inkjet ink; ultraviolet curing ink; ink for applicators; ink for stamps; paints; cosmetics; and coloring liquids for fibers.

### EXAMPLES

Examples are shown below, but the embodiments of the present invention are not limited to these Examples. Unless otherwise specified, "parts" and "%" in Examples indicates "parts by mass" and "% by mass", respectively.

### Example 1

### Preparation of Pigment Dispersion

10 parts of guanine [manufactured by Tokyo Chemical Industry Co., Ltd.], 5 parts of a dispersant [manufactured by Toagosei Co., Ltd., product name: Aron A-12SL (solid content: 40%)], and 85 parts of water were mixed. Then, 200 parts of zirconia beads having a diameter of 1.4 to 1.6 mm were added as media, and the mixture was subjected to a pulverization/dispersion treatment for 1 hour using a bead mill to prepare a pigment dispersion (guanine pigment dispersion). The content of the dispersant relative to the total mass of the pigment dispersion is 2%, and the content of the dispersant relative to the guanine pigment is 20%. The average particle size of the guanine pigment dispersed in the pigment dispersion was measured by the method mentioned above and found to be 0.63 µm.

### Examples 2 to 7, and Comparative Examples 1 and 2

### Preparation of Pigment Dispersion

The pigment dispersions of Examples 2 to 7 and Comparative Examples 1 and 2 were prepared in the same manner as Example 1, except that the duration time of the pulverization/dispersion treatment was set at the duration time shown in Table 1 below. The average particle size of the guanine pigment dispersed in the pigment dispersion is shown in Table 1 below.

### [Evaluation of Dispersion Stability]

Each of the pigment dispersions of Examples 1 to 7 and Comparative Examples 1 and 2 in an amount of 40 g was put in a screw tube bottle (No. 7), and then left to stand in an environment of room temperature (25°C) for 7 days. After a lapse of 7 days, each of the pigment dispersions was visually checked, and the dispersion stability was evaluated according to the following criteria. The evaluation results are shown in Table 1 below. Rating of "A" to "C" was considered to be acceptable.
A: The pigment maintained its dispersed state, and the pigment dispersion was uniformly white.
B: The pigment settled slightly, and a dark white layer was visually observed slightly at the bottom of the pigment dispersion.
C: The pigment settled somewhat, and a pale white layer was visually observed on the upper part of the pigment dispersion (the pigment dispersion exhibited white shading).
D: Most of the pigment settled, and a supernatant (aqueous layer) was visually observed in the pigment dispersion, and the dispersion was completely separated into two layers.

### [Concealability Test]

Each pigment dispersion of Examples 1 to 7 and Comparative Examples 1 and 2 was uniformly coated on a black fine paper (medium thickness, manufactured by Katsueisha Co., Ltd.) using a bar coater (#2) and then dried to obtain a test sample. The density of the coated area of the test sample was visually checked, and the concealability was evaluated according to the following criteria.
The evaluation results are shown in Table 1 below. Rating of "A" to "C" was considered to be acceptable.
A: The coated area was clearly white and had sufficient concealability.
B: The coated area was slightly pale white, but had concealability.
C: The coated area was somewhat pale white, and in places the black color of the paper was visible through the coated area, but the concealability was at a practical level.
D: The coated area was a significantly pale white, and the black color of the paper was clearly visible through the coated area, and the concealability was insufficient.

**[Table 1]**

| | | Example | | | | | | | Comparative Example | |
|---|---|---|---|---|---|---|---|---|---|---|
| | | 1 | 2 | 3 | 4 | 5 | 6 | 7 | 1 | 2 |
| Dispersion time (hour) | | 1 | 3 | 6 | 12 | 24 | 48 | 72 | 0.5 | 96 |
| Average particle size (µm) | | 0.63 | 0.41 | 0.35 | 0.31 | 0.26 | 0.26 | 0.21 | 0.96 | 0.18 |
| Evaluation | Dispersion stability | C | C | C | B | B | B | A | D | A |
| | Concealability | A | A | A | A | B | B | C | A | D |

### Example 8

### Preparation of Writing Instrument Ink Composition

Guanine (manufactured by Tokyo Chemical Industry Co., Ltd.) (20 parts), 7.5 parts of a dispersant (manufactured by Toagosei Co., Ltd., product name: Aron A-12SL (solid content: 40%)), and 72.5 parts of water were mixed. Then, 200 parts of zirconia beads having a diameter of 1.4 to 1.6 mm were added as media, and the mixture was subjected to a pulverization/dispersion treatment for 5 hours using a bead mill to prepare a writing instrument ink composition. The content of the dispersant relative to the total mass of the ink composition is 3%, and the content of the dispersant relative to the guanine pigment is 15%.

### Preparation of Writing Instrument

The above writing instrument ink composition was impregnated into an ink occlusion body made of polyester sliver covered with a synthetic resin film and, after containing in a barrel made of a polypropylene resin, a resin-processed pen body (cannnonball type) of polyester fibers was assembled at a tip part of the barrel in a connected state through a resin holder and a cap was attached to fabricate a filling type writing instrument (marking pen).

### Comparative Example 3

### Preparation of Writing Instrument Ink Composition

The writing instrument ink composition of Comparative Example 3 was prepared in the same manner as in Example 8, except that the duration time of the pulverization/dispersion treatment was set at 96 hours. The content of the dispersant relative to the total mass of the ink composition is 3%, and the content of the dispersant relative to the guanine pigment is 15%.

### Preparation of Writing Instrument

The writing instrument (marking pen) of Comparative Example 3 was prepared in the same manner as in Example 8.

### Comparative Example 4

### Preparation of Writing Instrument Ink Composition

Titanium oxide (manufactured by TAYCA Co., Ltd., product name: JR-707) (20 parts), 7.5 parts of a dispersant (manufactured by BYK Japan K.K., product name: DISPERBYK-190 (solid content: 40%)), and 72.5 parts of water were mixed. Then, 100 parts of glass beads having a diameter of 2.0 mm were added as media, and the mixture was subjected to a pulverization/dispersion treatment for 1 hour using a bead mill to prepare a writing instrument ink composition. The content of the dispersant relative to the total mass of the ink composition is 3%, and the content of the dispersant relative to titanium oxide is 15%.

### Preparation of Writing Instrument

The writing instrument (marking pen) of Comparative Example 4 was prepared in the same manner as in Example 8.

### [Writing Test]

Using each of the writing instruments prepared in Example 8 and Comparative Examples 3 and 4, Chinese character "EI" was handwritten on a black fine paper (medium thickness, manufactured by Katsueisha Co., Ltd.) in a room temperature (20°C) environment. The condition of the handwriting was visually checked, and the concealability of the handwriting was evaluated according to the following criteria. The evaluation results are shown in Table 2 below. Rating of "A" was considered to be acceptable.
A: The handwriting was white and had concealability.
B: The handwriting was noticeably pale white, and the black color of the paper was clearly visible through the handwriting, and the concealability was insufficient.

**[Table 2]**

| | | Example | Comparative Example | |
|---|---|---|---|---|
| | | 8 | 3 | 4 |
| Evaluation | Concealability of handwriting | A | B | A |

### [Writing Test after Lapse of Time]

Each of the writing instruments subjected to the above-mentioned writing test was left to stand with the pen tip facing upwards (upright position) in a room temperature (20°C) environment for 3 days. After lapse of 3 days, Chinese character "EI" was handwritten on a black fine paper (medium thickness, manufactured by Katsueisha Co., Ltd.) in a room temperature (20°C) environment. The condition of the handwriting was visually checked, and the concealability of the handwriting after lapse of time was evaluated according to the following criteria. The evaluation results are shown in Table 3 below. Rating of "A" and "B" were considered to be acceptable.
A: The whiteness of the handwriting was the same as or at the same level as the initial state, and had concealability.
B: The white color of the handwriting was slightly pale compared with the initial handwriting, but the concealability was at a practical level.
C: The color of the handwriting was pale compared with the initial handwriting, and the concealability was insufficient. Alternatively, it was impossible to write.

**[Table 3]**

| | | Example | Comparative Example | |
|---|---|---|---|---|
| | | 8 | 3 | 4 |
| Evaluation | Concealability of handwriting after lapse of time | B | C | C |

### Example 9

### Preparation of Writing Instrument Ink Composition

Guanine (manufactured by Tokyo Chemical Industry Co., Ltd.) (20 parts), 7.5 parts of a dispersant (manufactured by BYK Japan K.K., product name: DISPERBYK-2010 (solid content: 40%)), and 72.5 parts of water were mixed. Then, 200 parts of zirconia beads having a diameter of 1.4 to 1.6 mm were added as media, and the mixture was subjected to a pulverization/dispersion treatment for 5 hours using a bead mill to prepare a pigment dispersion (guanine pigment dispersion).

A writing instrument ink composition was prepared by mixing 88 parts of the above pigment dispersion, 0.2 part of a shear thinning agent (succinoglycan) [manufactured by Sansho Co., Ltd., product name: LEOSAN], 1 part of a phosphate ester-based surfactant [manufactured by Dai-ichi Kogyo Seiyaku Co., Ltd., product name: PLYSURF AL], 1 part of a pH adjuster (triethanolamine), 0.1 part of a preservative [manufactured by Lonza Japan Ltd., product name: Proxel XL-2(S)], and 9.7 parts of water. The content of the dispersant relative to the total mass of the ink composition (i.e., the sum of "DISPERBYK-2010" and "PLYSURF AL") is 3.6%, and the content of the dispersant relative to the guanine pigment (i.e., the sum of "DISPERBYK-2010" and "PLYSURF AL") is 21%.

### Preparation of Writing Instrument

An ink container formed of a polypropylene pipe was filled with the above ink composition by suction, and then the ink container was connected to a ballpoint pen tip holding a cemented carbide ball having a diameter of 0.5 mm at its tip through a resin holder. Next, a viscoelastic ink backflow inhibitor (liquid plug) containing polybutene as a main component was filled from a rear end of the ink container, and a tail plug was fitted to a rear part of the pipe, and degassing treatment was performed by centrifugation to obtain a ballpoint pen refill.

Next, the above refill was incorporated into a barrel to produce a writing instrument (retractable ballpoint pen).

The ballpoint pen mentioned above is provided with a rear end knock type protruding and retracting structure in which the tip provided on the ballpoint pen refill is contained in the barrel in a state of being exposed to the outside air, and the tip protrudes from a front end opening of the barrel by pressing an operation unit provided at the rear end of the barrel forward.

When a handwriting was made on a black fine paper (medium thickness, manufactured by Katsueisha Co., Ltd.) in a room temperature (20°C) environment using the ballpoint pen of Example 9, there was no writing defect such as faint parts and line skipping, and white handwriting was formed. This handwriting concealed the writing surface and was satisfactory handwriting having high concealability.

### Example 10

### Preparation of Pigment Dispersion

Guanine (manufactured by Tokyo Chemical Industry Co., Ltd.) (10 parts), 2.5 parts of a dispersant (manufactured by Toagosei Co., Ltd., product name: Aron A-12SL (solid content: 40%)), and 87.5 parts of water were mixed. Then, 200 parts of zirconia beads having a diameter of 1.4 to 1.6 mm were added as media, and the mixture was subjected to a pulverization/dispersion treatment for 6 hours in a bead mill to prepare a pigment dispersion (guanine pigment dispersion). The content of the dispersant relative to the total mass of the pigment dispersion is 1%, and the content of the dispersant relative to the guanine pigment is 10%. Further, the average particle size of the guanine pigment dispersed in the pigment dispersion was measured by the above-mentioned method and was found to be 0.35 µm.

### Examples 11 to 16

### Preparation of Pigment Dispersion

Each of the pigment dispersions of Examples 11 to 16 was prepared in the same manner as Example 10, except that the types and amounts of the materials used were changed to those shown in Table 4 below. The content of the dispersant relative to the total mass of the pigment dispersion, the content of the dispersant relative to the guanine pigment, and the average particle size of the guanine pigment dispersed in the pigment dispersion are shown in Table 4 below.

**[Table 4]**

| Name of materials | | Example | | | | | | |
|---|---|---|---|---|---|---|---|---|
| | Note | 10 | 11 | 12 | 13 | 14 | 15 | 16 |
| Guanine | (1) | 10 | 10 | 10 | 10 | 10 | 10 | 10 |
| Dispersant A | (2) | 2.5 | | | | | | |
| Dispersant B | (3) | | 2.2 | | | | | |
| Dispersant C | (4) | | | 2.5 | | | | |
| Dispersant D | (5) | | | | 1.0 | | | |
| Dispersant E | (6) | | | | | 2.7 | | |
| Dispersant F | (7) | | | | | | 2.0 | |
| Dispersant G | (8) | | | | | | | 2.5 |
| Water | | 87.5 | 87.8 | 87.5 | 89 | 87.3 | 88 | 87.5 |
| Total | | 100 | 100 | 100 | 100 | 100 | 100 | 100 |

| | | | | | | | |
|---|---|---|---|---|---|---|---|
| Content of the dispersant relative to total mass of the pigment dispersion (%) | 1 | 1 | 1 | 1 | 1 | 1 | 1 |
| Content of dispersant relative to guanine pigment (%) | 10 | 10 | 10 | 10 | 10 | 10 | 10 |
| Average particle size (µm) | 0.35 | 0.3 | 0.31 | 0.33 | 0.29 | 0.3 | 0.34 |

The contents of the materials in Table 4 will be described according to the note numbers.
(1) manufactured by Tokyo Chemical Industry Co., Ltd.
(2) Unneutralized acrylic-sulfonic acid copolymer [manufactured by Toagosei Co., Ltd., product name: Aron A-12SL (solid content: 40%)]
(3) 2-Amino-2-methyl-1-propanol salt of modified carboxy group-containing polymer [manufactured by Kyoeisha Chemical Co., Ltd., product name: FLOWLEN G-700AMP (solid content: 45%), acid value: 25 mg KOH/g, amine value: 25 mg KOH/g]
(4) Control polymerization acrylic copolymer [manufactured by BYK Japan K.K., product name: DISPERBYK-2010 (solid content: 40%), acid value: 20 mg KOH/g, amine value: 20 mg KOH/g]
(5) Copolymer having acidic groups [manufactured by BYK Japan K.K., product name: DISPERBYK-102 (solid content: 99%), acid value: 101 mg KOH/g]
(6) Carboxy group-containing styrene-acrylic copolymer [manufactured by BASF Japan Ltd., product name: JONCRYL 57J (solid content: 37%), acid value: 215 mg KOH/g]
(7) Acidic group-containing comb-type polymer dispersant [manufactured by Lubrizol Japan Ltd., product name: Solsperse 46000 (solid content: 50%), acid value: 12±2 mg KOH/g]
(8) Acidic group-containing comb-type polymer dispersant [manufactured by Lubrizol Japan Ltd., product name: Solsperse 47000 (solid content: 40%), acid value: 8±1.5 mg KOH/g]

### [Evaluation of Dispersion Stability]

The dispersion stability of each of the pigment dispersions of Examples 10 to 16 was evaluated in the same manner as in Examples 1 to 7 and Comparative Examples 1 and 2 above. The evaluation results are shown in Table 5 below.

**[Table 5]**

| | | Example | | | | | | |
|---|---|---|---|---|---|---|---|---|
| | | 10 | 11 | 12 | 13 | 14 | 15 | 16 |
| Evaluation | Dispersion stability | B | B | B | A | A | B | B |

### Application Example 1

### Preparation of Liquid Composition

Guanine (manufactured by Tokyo Chemical Industry Co., Ltd.) (20 parts), 7.5 parts of a dispersant (manufactured by Toagosei Co., Ltd., product name: Aron A-12SL (solid content: 40%)), and 72.5 parts of water were mixed. Then, 200 parts of zirconia beads having a diameter of 1.4 to 1.6 mm were added as media, and the mixture was subjected to a pulverization/dispersion treatment for 5 hours using a bead mill to prepare a liquid composition which is a printing ink for screen printing.

### Fabrication of Laminate

A solid pattern was screen-printed on the surface of a black fine paper (medium thickness, manufactured by Katsueisha Co., Ltd.) using the above printing ink, and then dried and cured to provide a colored layer, thus obtaining a laminate.

In the laminate of Application Example 1, the colored layer was clear white and had satisfactory concealability, and the black color of the underlying paper was not visible through the colored layer. Further, since the dispersibility of the guanine pigment in the liquid composition was excellent, the colored layer had a uniform density and satisfactory appearance.

This application claims priority based on Japanese Patent Application No. 2022-105064 filed on June 29, 2022, the disclosure of which is incorporated by reference herein.

## Claims

1. A writing instrument ink composition comprising at least a pigment containing a guanine pigment, and a solvent, wherein the guanine pigment has an average particle size of 0.2 to 0.95 µm.

2. The ink composition according to claim 1, further comprising a dispersant.

3. The ink composition according to claim 2, wherein the dispersant includes an acidic group and/or a salt of an acidic group.

4. The ink composition according to any one of claims 1 to 3, wherein the content of the guanine pigment relative to the total mass of the ink composition is 1 to 50% by mass.

5. The ink composition according to any one of claims 1 to 4, further comprising a colorant.

6. A writing instrument containing the ink composition according to any one of claims 1 to 5.
